# DEMANDE DE BREVET EUROPEEN

(11) **EP 4 474 255 A1**
(43) Date de publication de la demande: **11.12.2024**
(21) Numéro de dépôt: 24178603.7
(22) Date de dépôt: 28.05.2024
(51) Int. Cl.: B62D 21/15, B62D 25/20, B60K 15/03, B60K 15/067, B60K 15/063, B60K 15/07, B62D 43/10

(54) **VÉHICULE AUTOMOBILE COMPRENANT UN ENSEMBLE DE PROTECTION DU RÉSERVOIR DE CARBURANT**

(30) Priorité: 07.06.2023 FR 2305748
(71) Demandeur: Renault s.a.s, 92100 Boulogne Billancourt (FR)
(72) Inventeur: JEANNIN, Christophe, 78640 Villiers Saint Frederic (FR); SENER, Yunus-Emre, 16372 BURSA (TR)

(57) **Abrégé**

Véhicule automobile comprenant un plancher s'étendant selon un axe longitudinal (X), comportant un ensemble (30) de protection fixé sur la surface inférieure d'un plancher du véhicule.

L'ensemble (30) de protection comprend :
- un organe de protection (31) de forme tubulaire s'étendant selon un axe transversal (Y) perpendiculaire à l'axe longitudinal (X),
- deux renforts de fixation (32) solidaires des extrémités libres à l'organe de protection (31), et comportant une interface de fixation (32a) pour la fixation par visseries sur la surface inférieure du plancher du véhicule,
- un support (33) configuré pour supporter à la fois un réservoir de vapeurs de carburant (8) relié au réservoir de carburant, et un filtre à particules (9), et
- au moins un élément de liaison (35) s'étendant selon un axe vertical (Z) perpendiculaire à l'axe transversal (Y) et à l'axe longitudinal (X) reliant le support (33) à l'organe de protection (31).

## Description

La présente invention concerne le domaine des véhicules automobiles et notamment la structure arrière d'un véhicule automobile.

Plus particulièrement, la présente invention concerne les systèmes de protection d'un réservoir à carburant présent dans un véhicule automobile, notamment lors d'un choc arrière.

Généralement, un véhicule automobile comprend une roue de secours ou un réservoir de gaz liquéfié logé dans un compartiment dédié sous le plancher du véhicule, entre l'extrémité arrière du véhicule, dans le sens de circulation du véhicule en marche avant, et l'essieu arrière du véhicule.

Le réservoir de carburant du véhicule est généralement situé sous le plancher du véhicule à proximité de l'essieu arrière et du compartiment dédié à la roue de secours.

Les solutions actuelles ne permettent pas de protéger efficacement le réservoir à carburant lors d'un choc arrière tout en respectant les exigences d'homologation.

Ainsi, il existe un besoin d'améliorer les systèmes de protection du réservoir à carburant de véhicule automobile.

L'objectif de l'invention est donc de pallier ces inconvénients et d'améliorer les systèmes de protection du réservoir à carburant de véhicule automobile, afin de permettre une implantation aisée, tout en réduisant les coûts de conception et de montage.

La présente invention a pour objet un véhicule automobile comprenant un plancher s'étendant selon un axe longitudinal, comportant un premier compartiment de réception d'un réservoir de carburant et un deuxième compartiment de réception d'une roue arrière ou d'un réservoir de gaz liquéfié situé en aval du premier compartiment, et un ensemble de protection fixé sur la surface inférieure du plancher du véhicule dans le deuxième compartiment en amont du deuxième compartiment.

L'ensemble de protection comprend :
- un organe de protection ou tube de protection de forme tubulaire s'étendant selon un axe transversal perpendiculaire à l'axe longitudinal,
- deux renforts de fixation solidaires des extrémités libres à l'organe de protection, notamment respectivement d'une portion de fixation, et comportant une interface de fixation, tel que par exemple des orifices traversants, pour la fixation par visseries sur la surface inférieure du plancher du véhicule,
- un support configuré pour supporter à la fois un réservoir de vapeurs de carburant relié au réservoir de carburant, connu sous le nom de canister en termes anglo-saxons et un filtre à particules, et
- au moins un élément de liaison s'étendant selon un axe vertical perpendiculaire à l'axe transversal et à l'axe longitudinal reliant le support à l'organe de protection.

L'ensemble de protection a pour fonction à la fois de protéger d'un choc à l'arrière du véhicule et de supporter le filtre à poussières et le réservoir de vapeurs de carburant.

L'ensemble de protection est configuré pour absorber l'énergie d'un choc arrière et ainsi éviter à la roue de secours ou au réservoir de GPL de venir en contact avec le réservoir à carburant.

Le tube de protection forme un limiteur de choc configuré pour limiter l'agression de la roue de secours ou du réservoir de GPL sur le réservoir de carburant lors d'un choc à l'arrière du véhicule. Le tube de protection permet également de protéger le réservoir de vapeurs de carburant et le filtre à poussières lors d'un choc à l'arrière du véhicule.

Le support permet de maintenir le réservoir de vapeurs de carburant et le filtre à poussières, ne nécessitant pas de pièces supplémentaires dans le véhicule automobile.

Avantageusement, toutes les pièces formant l'ensemble de protection forment ensemble un ensemble monolithique dans lequel toutes les pièces sont fixées de manière irréversibles entre elles.

En d'autres termes, les renforts de fixation sont, de préférence, fixés par soudage au tube de protection et les éléments de liaison sont fixés par soudage respectivement au support et au tube de protection.

Avantageusement, l'organe de protection comprend une embase s'étendant selon l'axe transversal et deux portions de fixation au plancher du véhicule, lesdites portions de fixation s'étendant chacune selon la direction longitudinale, opposée à la direction de l'axe longitudinal, c'est-à-dire s'étendant vers l'avant du véhicule.

Par exemple, les deux portions de fixation de l'organe de protection sont parallèles entre elles.

Les deux portions de fixation de l'organe de protection peuvent être reliées à l'embase respectivement par une portion de liaison s'étendant selon une direction inclinée selon l'axe vertical et l'axe transversal.

Par exemple, les portions de liaison peuvent avoir, de manière nullement limitative, une ou plusieurs courbures.

Par exemple, le tube de protection est creux et comprend une paroi d'épaisseur comprise entre 1.5mm et 2.5mm, de préférence égale à 2mm.

Avantageusement, les renforts de fixation se présentent chacun sous la forme d'une plaque s'étendant dans un premier plan comprenant l'axe longitudinal et l'axe transversal.

Par exemple, chaque renfort de fixation est fixé sur la surface inférieure de la portion de fixation correspondante du tube de protection. En variante, on pourrait prévoir de fixer les renforts de fixation sur la surface supérieure de la portion de fixation correspondante.

Les renforts de fixation sont, de préférence, fixés par soudage au tube de protection.

Avantageusement, le support comprend une embase de fixation transversale s'étendant dans un deuxième plan comprenant l'axe vertical et l'axe transversal, et une portion de fixation longitudinale s'étendant dans un troisième plan comprenant l'axe longitudinal et l'axe transversal à partir d'une extrémité supérieure de l'embase de fixation transversale vers l'arrière du véhicule.

Par exemple, la portion de fixation longitudinale comprend des encoches longitudinales.

Par exemple, l'embase de fixation transversale comprend une première portion comprenant une première interface de fixation, par exemple un perçage coopérant avec des visseries, pour la fixation du filtre à poussières et une deuxième portion comprenant une deuxième interface de fixation, par exemple une pluralité de rainures débouchantes coopérant avec des visseries, pour la fixation du réservoir de vapeurs de carburant.

La deuxième portion de fixation présente, de préférence, une largeur selon la direction transversale inférieure à la largeur de la première portion et une hauteur selon la direction verticale supérieure à la hauteur de la première portion.

Par exemple, la largeur de la première portion de fixation est sensiblement égale à la largeur de la portion de fixation longitudinale.

Selon un autre mode de réalisation, l'ensemble de protection comprend en outre deux éléments de liaison parallèles entre eux, s'étendant selon l'axe vertical et reliant le support au tube de protection.

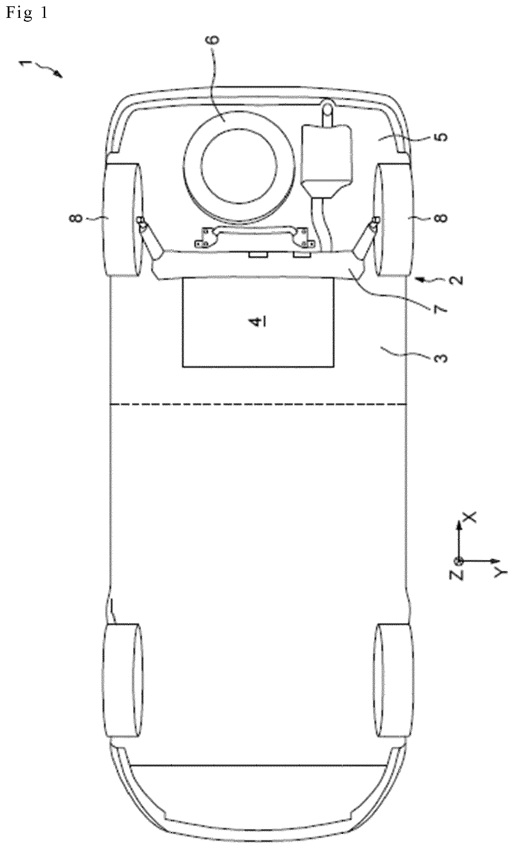

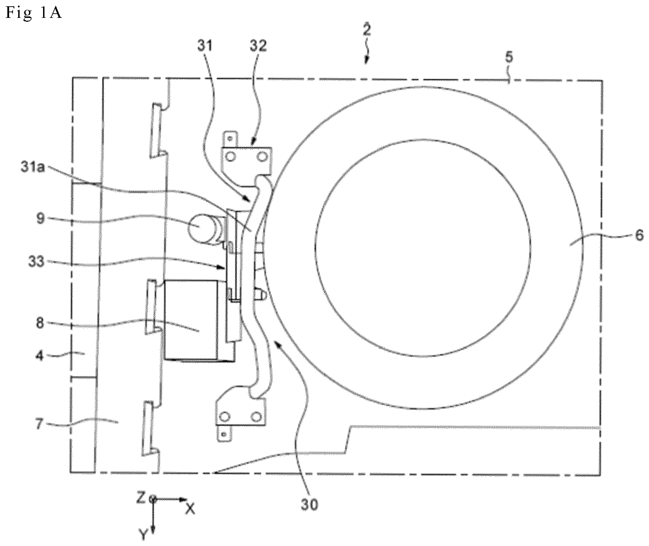

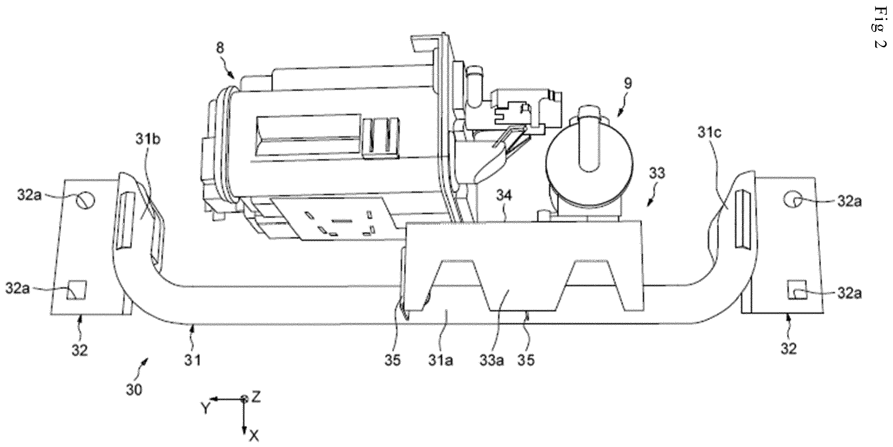

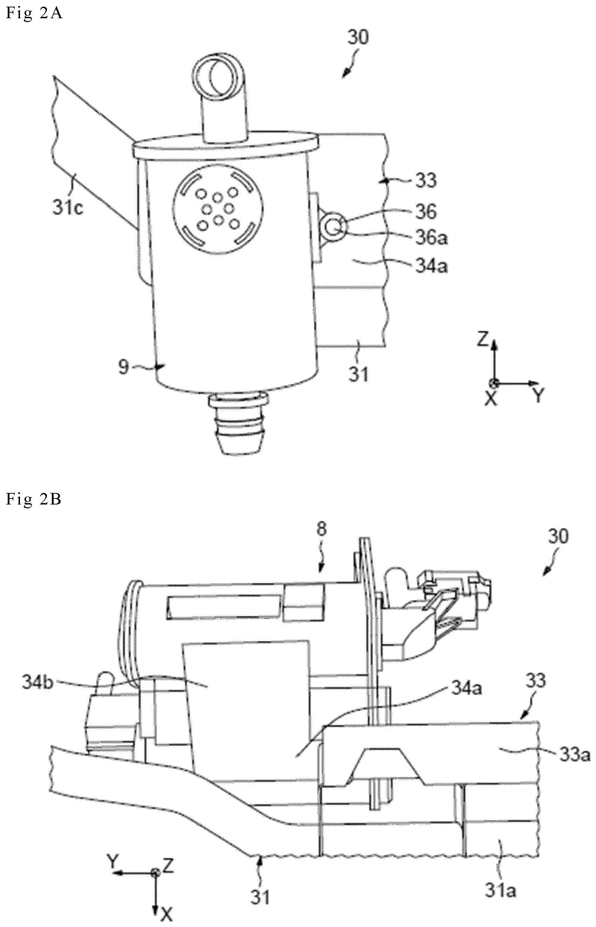

D'autres buts, caractéristiques et avantages de l'invention apparaîtront à la lecture de la description suivante, donnée uniquement à titre d'exemple non limitatif, et faite en référence aux dessins annexés sur lesquels :
[Fig. 1]
   illustre de manière très schématique une vue de dessous d'un véhicule automobile comprenant un ensemble de protection du réservoir à carburant selon l'invention ;
[Fig. 1A]
   est une de détails de la figure 1 ;
[Fig.2]
   représente en détails l'ensemble de protection du réservoir à carburant de la figure 1 ;
[Fig.2A]
   illustre en détails la fixation d'un filtre à poussière sur l'ensemble de protection de la figure 2 ;
[Fig.2B]
   illustre en détails la fixation d'un réservoir à vapeurs de carburant sur l'ensemble de protection de la figure 2 ; et
[Fig. 3]
   représente en perspective de l'ensemble de protection du réservoir à carburant de la figure 2, seul.

Dans la description qui suit, les termes « longitudinal », « transversal », « vertical », « avant », « arrière », « gauche » et « droite » sont définis selon le repère orthogonal habituel des véhicules à moteur, représenté sur les dessins, et qui comprend :
- un axe longitudinal X, horizontal et orienté de l'avant vers l'arrière du véhicule ;
- un axe transversal Y, horizontal, perpendiculaire à l'axe longitudinal X et orienté de la gauche vers la droite du véhicule quand le véhicule avance ;
- un axe vertical Z, orthogonal aux axes longitudinal et transversal X et Y et dirigé de bas en haut.

Sur la figure 1, on a représenté de manière très schématique une vue de dessous du plancher d'un véhicule automobile, référencé 1 dans son ensemble, comprenant une partie arrière 2 comprenant un premier compartiment 3 configuré pour recevoir un réservoir à carburant 4 et un deuxième compartiment 5, situé à l'extrémité libre de la partie arrière 2, configuré pour recevoir une roue de secours 6 ou un réservoir de gaz liquéfié, d'acronyme « GPL ».

De manière connue en soi, le réservoir de carburant 4 est fixé sur des longerons (non représentés) solidaires du plancher du véhicule 1, en amont du deuxième compartiment 5, en considérant l'axe longitudinal X.

De manière connue en soi, la partie arrière 2 du véhicule 1 comprend en outre un essieu arrière 7 fixé sur la surface inférieure du plancher et auquel sont reliées les roues arrière 8 du véhicule.

La partie arrière 2 du véhicule automobile 1 comprend en outre un ensemble 30 de protection fixé sur la surface inférieure du plancher et séparant le réservoir de carburant 4 du deuxième compartiment 5 destiné à loger la roue de secours 6 ou un réservoir de GPL.

L'ensemble 30 de protection est configuré pour absorber l'énergie d'un choc arrière et ainsi éviter à la roue de secours ou au réservoir de GPL de venir en contact avec le réservoir à carburant 4.

A cet effet, l'ensemble 30 de protection comprend un organe de protection 31 de forme tubulaire comprenant une embase 31a s'étendant selon l'axe transversal Y et deux portions de fixation 31b, 31c au plancher du véhicule 1. Les deux portions de fixation 31b, 31c s'étendent chacune selon une direction longitudinale, opposée à la direction de l'axe longitudinal X, c'est-à-dire s'étendant vers l'avant du véhicule 1.

Les deux portions de fixation 31b, 31c sont parallèles entre elles.

Les deux portions de fixation 31b, 31c sont reliées à l'embase 31a respectivement par une portion de liaison 31d, 31e s'étendant selon une direction inclinée selon l'axe vertical Z et l'axe transversal Y.

Les portions de liaison 31d, 31e peuvent avoir, de manière nullement limitative, une ou plusieurs courbures.

Le tube de protection 31 forme un limiteur de choc configuré pour limiter l'agression de la roue de secours 6 ou du réservoir de GPL sur le réservoir de carburant 4 lors d'un choc à l'arrière du véhicule.

Le tube de protection 31 est creux et comprend une paroi d'épaisseur comprise entre 1.5mm et 2.5mm, de préférence égale à 2mm.

L'ensemble 30 de protection comprend deux renforts de fixation 32 solidaires des extrémités libres du tube de protection 31, respectivement d'une portion de fixation 31b, 31c et comportant des orifices traversants 32a pour la fixation par visseries (non représentées) sur la surface inférieure du plancher du véhicule 1.

Les renforts de fixation 32 se présentent chacun sous la forme d'une plaque s'étendant dans un plan YX comprenant l'axe longitudinal X et l'axe transversal Y.

Chaque renfort de fixation 32 est, ici, fixé sur la surface inférieure de la portion de fixation correspondante 31b, 31c du tube de protection 31. En variante, on pourrait prévoir de fixer les renforts de fixation sur la surface supérieure de la portion de fixation correspondante 31b, 31c.

L'ensemble 30 de protection comprend en outre un support 33 destiné à supporter à la fois un réservoir de vapeurs de carburant 8, connu sous le nom de canister en termes anglo-saxons et un filtre à particules 9.

Le réservoir de vapeurs de carburant 8 a pour fonction de stocker les vapeurs de carburant issues du réservoir à carburant avant d'être renvoyées dans le circuit de carburant, évitant ainsi tout échappement dans l'atmosphère.

Le filtre à poussières 9 permet d'éviter l'entrée des poussières dans l'air afin de ne pas détériorer la pompe (non représentée) du réservoir à carburant 4.

Le support 33 permet donc de maintenir le réservoir de vapeurs de carburant 8 et le filtre à poussières 9, ne nécessitant pas de pièces supplémentaires dans le véhicule automobile.

Le tube de protection 31 permet également de protéger le réservoir de vapeurs de carburant 8 et le filtre à poussières 9 lors d'un choc à l'arrière du véhicule.

Le support 33 comprend une embase de fixation transversale 34 s'étendant dans un plan YZ comprenant l'axe vertical et l'axe transversal, et une portion de fixation longitudinale 33a s'étendant dans un plan XY comprenant l'axe longitudinal X et l'axe transversal Y, à partir d'une extrémité supérieure de l'embase de fixation transversale 34 vers l'arrière du véhicule.

La portion de fixation longitudinale 33a comprend, ici, des encoches longitudinales 33b.

L'embase de fixation transversale 34 comprend une première portion 34a de fixation du filtre à poussières 9 et une deuxième portion 34b de fixation du réservoir de vapeurs de carburant 8.

La première portion 34a de fixation comprend un perçage 36, visible sur la figure 2A, destiné à recevoir un élément de visserie 36a pour la fixation du filtre à poussières 9.

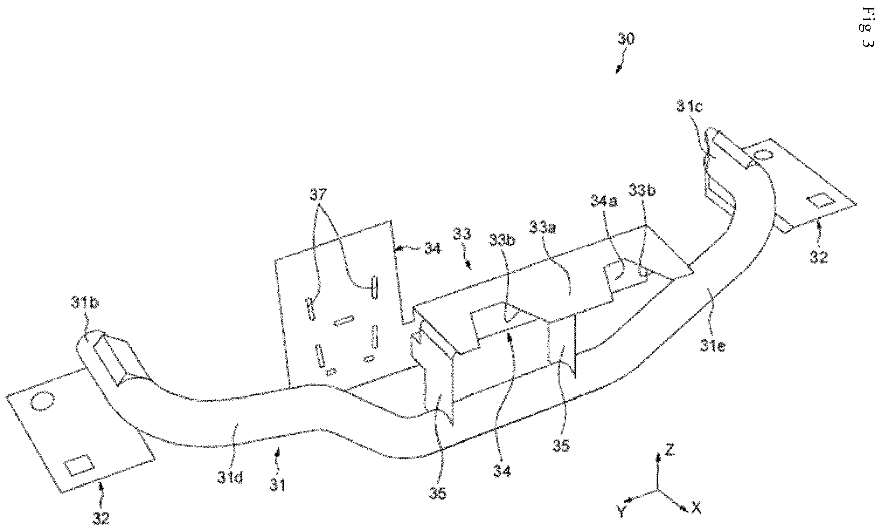

La deuxième portion 34b de fixation comprend une pluralité de rainures débouchantes 37, visibles sur la figure 3, pour la fixation par visseries (non représentée) du réservoir de vapeurs de carburant 8.

Les rainures 37 s'étendent, ici, selon l'axe vertical Z et selon l'axe transversal Y. en variante, on pourrait prévoir un perçage ou une autre configuration de rainures pour la fixation du réservoir de vapeurs de carburant 8.

La deuxième portion 34b de fixation présente une largeur selon la direction transversale Y inférieure à la largeur de la première portion 34a.

La largeur de la première portion 34a de fixation est sensiblement égale à la largeur de la portion de fixation longitudinale 33a.

La deuxième portion 34b de fixation présente une hauteur selon la direction verticale Z supérieure à la hauteur de la première portion 34a.

L'ensemble 30 de protection comprend en outre deux éléments de liaison 35 s'étendant selon l'axe vertical Z et configurés pour relier le support 33 au tube de protection 31.

Les renforts de fixation 32 sont, de préférence, fixés par soudage au tube de protection 31 et les éléments de liaison 35 sont fixés par soudage respectivement au support 33 et au tube de protection 31.

En d'autres termes, toutes les pièces formant l'ensemble de protection forment ensemble un ensemble monolithique dans lequel toutes les pièces sont fixées de manière irréversibles entre elles.

L'ensemble de protection a pour fonction à la fois de protéger d'un choc à l'arrière du véhicule et de supporter le filtre à poussières 9 et le réservoir de vapeurs de carburant 8.

Toutes les pièces formant l'ensemble de protection sont réalisées en matière métallique, par exemple en acier.

L'ensemble de protection est monté directement sur la surface inférieure du plancher du véhicule et ne nécessite pas l'ajout de pièces supplémentaires, ce qui réduit la masse de l'ensemble de protection.

Grâce à l'ensemble de protection selon l'invention, il est possible de diminuer la déformation du réservoir de carburant, et par conséquent de réduire les risques d'incendie en cas de choc à l'arrière du véhicule, tout en permettant d'améliorer la compacité de la partie arrière du véhicule en intégrant directement sur ledit ensemble de protection, d'un support dédié à la fois à la fixation du réservoir de vapeurs de carburant et du filtre à poussières, ce qui réduit davantage la masse du véhicule.

Par ailleurs, l'ensemble de protection selon l'invention permet également de protéger le réservoir de vapeurs de carburant et le filtre à poussières lors d'un choc à l'arrière du véhicule.

## Revendications

1. Véhicule automobile (1) comprenant un plancher s'étendant selon un axe longitudinal (X), comportant un premier compartiment (3) de réception d'un réservoir de carburant (4) et un deuxième compartiment (5) de réception d'une roue arrière (6) ou d'un réservoir de gaz liquéfié situé en aval du premier compartiment (3), et un ensemble (30) de protection fixé sur la surface inférieure du plancher du véhicule dans le deuxième compartiment (5) en amont du deuxième compartiment (5), **caractérisé en ce que** l'ensemble (30) de protection comprend :
- un organe de protection (31) de forme tubulaire s'étendant selon un axe transversal (Y) perpendiculaire à l'axe longitudinal (X),
- deux renforts de fixation (32) solidaires des extrémités libres à l'organe de protection (31), et comportant une interface de fixation (32a) pour la fixation par visseries sur la surface inférieure du plancher du véhicule (1),
- un support (33) configuré pour supporter à la fois un réservoir de vapeurs de carburant (8) relié au réservoir de carburant (4), et un filtre à particules (9), et
- au moins un élément de liaison (35) s'étendant selon un axe vertical (Z) perpendiculaire à l'axe transversal (Y) et à l'axe longitudinal (X) reliant le support (33) à l'organe de protection (31).

2. Véhicule automobile (1) selon la revendication 1, dans lequel toutes les pièces formant l'ensemble de protection (30) forment ensemble un ensemble monolithique dans lequel toutes les pièces sont fixées de manière irréversibles entre elles.

3. Véhicule automobile (1) selon la revendication 1 ou 2, dans lequel l'organe de protection (31) comprend une embase (31a) s'étendant selon l'axe transversal (Y) et deux portions de fixation (31b, 31c) au plancher du véhicule (1), lesdites portions de fixation (31b, 31c) s'étendant chacune selon la direction longitudinale, opposée à la direction de l'axe longitudinal (X).

4. Véhicule automobile (1) selon la revendication 3, dans lequel les deux portions de fixation (31b, 31c) de l'organe de protection (31) sont parallèles entre elles.

5. Véhicule automobile (1) selon la revendication 3 ou 4, dans lequel les deux portions de fixation (31b, 31c) de l'organe de protection (31) sont reliées à l'embase (31a) respectivement par une portion de liaison (31d, 31e) s'étendant selon une direction inclinée selon l'axe vertical (Z) et l'axe transversal (Y).

6. Véhicule automobile (1) selon l'une quelconque des revendications précédentes, dans lequel les renforts de fixation (32) se présentent chacun sous la forme d'une plaque s'étendant dans un premier plan (YX) comprenant l'axe longitudinal (X) et l'axe transversal (Y).

7. Véhicule automobile (1) selon l'une quelconque des revendications précédentes, dans lequel le support (33) comprend une embase de fixation transversale (34) s'étendant dans un deuxième plan (YZ) comprenant l'axe vertical (Z) et l'axe transversal (Y), et une portion de fixation longitudinale (33a) s'étendant dans un troisième plan (XY) comprenant l'axe longitudinal (X) et l'axe transversal (Y) à partir d'une extrémité supérieure de l'embase de fixation transversale (34) vers l'arrière du véhicule.

8. Véhicule automobile (1) selon la revendication 7, dans lequel l'embase de fixation transversale (34) comprend une première portion (34a) comprenant une première interface de fixation pour la fixation du filtre à poussières (9) et une deuxième portion (34b) comprenant une deuxième interface de fixation pour la fixation du réservoir de vapeurs de carburant (8).

9. Véhicule automobile (1) selon la revendication 7 ou 8, dans lequel la deuxième portion (34b) de fixation présente une largeur selon la direction transversale (Y) inférieure à la largeur de la première portion (34a) et une hauteur selon la direction verticale (Z) supérieure à la hauteur de la première portion (34a).

10. Véhicule automobile (1) selon l'une quelconque des revendications précédentes, dans lequel l'ensemble (30) de protection comprend en outre deux éléments de liaison (35) parallèles entre eux, s'étendant selon l'axe vertical (Z) et reliant le support (33) au tube de protection (31).
